(19) Europäisches Patentamt

European Patent Office

Office européen des brevets

(11) **EP 3 011 264 B1**

(12) **FASCICULE DE BREVET EUROPEEN**

(45) Date de publication et mention de la délivrance du brevet:
**09.01.2019 Bulletin 2019/02**

(21) Numéro de dépôt: **14735491.4**

(22) Date de dépôt: **20.06.2014**

(51) Int Cl.:
***G01B 7/26*** *(2006.01)*

(86) Numéro de dépôt international:
**PCT/EP2014/062998**

(87) Numéro de publication internationale:
**WO 2014/202746 (24.12.2014 Gazette 2014/52)**

(54) **SYSTÈME DE MESURE DE L'ÉPAISSEUR D'UNE COUCHE DE GOMME D'UN PNEUMATIQUE**

SYSTEM ZUR MESSUNG DER DICKE EINER KAUTSCHUKSCHICHT FÜR EINEN REIFEN

SYSTEM FOR MEASURING THE THICKNESS OF A LAYER OF RUBBER FOR A TYRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.06.2013 FR 1355850**

(43) Date de publication de la demande:
**27.04.2016 Bulletin 2016/17**

(73) Titulaire: **Compagnie Générale des Etablissements Michelin**
**63000 Clermont-Ferrand (FR)**

(72) Inventeurs:
• **LEDOUX, Thomas**
**F-63040 Clermont-Ferrand Cedex 9 (FR)**
• **MARTIN, Denis**
**F-63040 Clermont-ferrand Cedex 9 (FR)**
• **MENEROUD, Patrick**
**F-38246 Meylan Cedex (FR)**
• **MICHAUD, Grégory**
**F-38246 Meylan Cedex (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
DE-A1- 19 745 734    GB-A- 2 470 779
US-A- 4 652 820    US-A1- 2002 088 527

EP 3 011 264 B1

## Description

### Domaine de l'invention

La présente invention est relative à un système de mesure de l'épaisseur d'une couche de gomme et plus particulièrement à la mesure de l'épaisseur de gomme restante d'une bande de roulement d'un pneumatique.

### État de la technique

De manière connue, la bande de roulement d'un bandage pneumatique ou plus simplement pneumatique, qu'il soit destiné à équiper un véhicule de tourisme, poids lourd, Génie Civil ou autre..., est pourvue d'une sculpture comprenant notamment des éléments de sculpture ou blocs élémentaires délimités par diverses rainures principales, longitudinales, transversales ou encore obliques, les blocs élémentaires pouvant en outre comporter diverses incisions ou lamelles plus fines. Les rainures constituent des canaux destinés à évacuer l'eau lors d'un roulage sur sol mouillé et définissent les bords d'attaque des éléments de sculpture.

Quand un pneumatique est neuf, la bande de roulement a sa hauteur maximale. Cette hauteur initiale peut varier en fonction du type de pneumatique considéré ainsi que de l'usage auquel il est destiné ; à titre d'exemple, les pneumatiques « hiver » ont généralement une profondeur de sculpture supérieure à celle de pneumatiques « été ». Lorsque le pneumatique s'use, la hauteur des blocs élémentaires de la sculpture diminue et la raideur de ces blocs élémentaires augmente. L'augmentation de raideur des blocs élémentaires de sculpture entraîne une diminution de certaines performances du pneumatique, telle l'adhérence sur sol mouillé. De plus, les capacités d'évacuation d'eau diminuent fortement lorsque la profondeur des canaux des sculptures diminue.

Il est donc souhaitable de pouvoir suivre l'évolution de l'usure de la bande de roulement d'un pneumatique.

Un tel suivi est usuellement réalisé par observation visuelle de la bande de roulement par l'usager ou un garagiste avec ou sans une mesure effective avec une jauge de profondeur. Mais cette observation n'est pas très aisée à réaliser notamment sur les pneumatiques arrière d'accès plus difficile et n'est pas non plus très précise.

De nombreuses propositions ont été faites pour automatiser la mesure de la profondeur de sculptures de pneumatiques. De tels dispositifs peuvent être disposés sur le sol de roulage des véhicules. Ces dispositifs fonctionnent usuellement selon deux techniques, soit à base de systèmes optiques avec des caméras ou des lasers, soit à base de courants de Foucault.

Les systèmes à base de systèmes optiques sont coûteux, doivent être encastrés dans le sol de roulage et nécessitent une maintenance régulière. Les mesures sont de plus perturbées par des salissures et la présence ou des projections d'eau, de boue, de neige, etc.

Les documents US 7,578,180 B2 et WO 2008/059283 proposent des systèmes de mesure de l'épaisseur de la bande de roulement d'un pneumatique, comportant des capteurs sensibles aux courants de Foucault générés par un champ magnétique d'excitation dans l'armature de sommet du pneumatique. Ces systèmes sont disposés sur un sol de roulage.

US 2002/0088527 A1 décrit également un système de mesure de l'épaisseur d'une couche de matériau caoutchouteux d'un pneumatique comprenant un capteur sensible aux courants de Foucault.

Or, on a constaté que ces systèmes de mesures n'étaient pas totalement satisfaisants dans certains cas. En effet, l'armature de certains pneumatiques est telle que le sommet du pneumatique n'est pas suffisamment conducteur pour permettre l'établissement de courants de Foucault. Par conséquent, ces systèmes de mesure sont inadaptés à la mesure d'épaisseur de la bande de roulement de ces pneumatiques.

### Description brève de l'invention

L'invention concerne, selon un objet décrit dans la revendication 1, un système de mesure de l'épaisseur d'une couche de matériau caoutchouteux d'un pneumatique, la couche comportant une face liée à une armature adjacente réalisée avec au moins un matériau de perméabilité magnétique supérieure à la perméabilité magnétique de l'air et une face libre en contact avec l'air, le système comprenant un capteur capable de mesurer la distance d entre la face liée et la face libre de la couche de matériau caoutchouteux. Le capteur comporte une unique bobine d'excitation et de mesure, et la fréquence et la puissance d'excitation de la bobine sont telles que l'inductance aux bornes de la bobine augmente lorsque la distance $d$ diminue. La bobine est disposée autour, ou est entourée par un matériau à haute résistivité électrique et haute perméabilité magnétique. Le système comprend de plus un boîtier portatif en matériau non conducteur protégeant le capteur et comprenant deux portions inclinées formant une rampe d'accès et une rampe de sortie entre lesquelles se trouve une portion horizontale formant la face d'application du boîtier contre la surface de la bande de roulement du pneumatique.

Le capteur du système de mesure selon un objet de l'invention a l'avantage de fonctionner en mode reluctant, donc avec, à puissance donnée, une fréquence d'excitation de la bobine plus faible que dans le cas d'un capteur similaire fonctionnant dans un mode sensible aux courants de Foucault.

Par ailleurs, la mesure en mode reluctant met à profit la perméabilité magnétique de l'armature adjacente et on constate que cela offre une grande sensibilité des mesures à toute variation de la distance $d$.

De préférence, la bobine du capteur est disposée autour, ou est entourée par, un matériau à haute résistivité électrique et haute perméabilité magnétique.

La présence de ce matériau à haute résistivité électrique et haute perméabilité magnétique, tel une ferrite, a l'avantage de localiser les lignes de champ magnétique et ainsi de réaliser une mesure d'épaisseur de couche plus localisée.

La ferrite peut avoir une forme de U.

La bobine est alors préférentiellement disposée autour de l'une des branches latérales du U.

Alternativement, la bobine peut être disposée autour du fond du U de la ferrite.

Dans ce mode de réalisation, la portée du capteur peut être améliorée simplement en augmentant l'écart entre les deux extrémités du U.

On peut également augmenter cette portée en augmentant la section des pôles constitués par les deux barres parallèles du circuit en forme de U.

Selon un autre mode de réalisation, la bobine d'excitation et de mesure est disposée autour d'un matériau à haute résistivité électrique et haute perméabilité magnétique en forme de E.

Dans ce mode de réalisation, la bobine est avantageusement disposée autour de la barre centrale du E.

Dans ce mode de réalisation, la portée du capteur peut être améliorée simplement en augmentant l'écart entre la barre centrale du E et les deux barres externes de celui-ci.

On peut également augmenter cette portée en augmentant la section des pôles constitués par les trois barres parallèles du circuit en forme de E.

Selon un troisième mode de réalisation, la bobine d'excitation et de mesure est disposée autour d'un matériau à haute résistivité électrique et haute perméabilité magnétique, le matériau présentant un axe de symétrie et selon toute coupe axiale une forme de E.

Dans ce mode de réalisation dit « en pot », la bobine est disposée autour de l'axe central du circuit magnétique.

Dans ce mode de réalisation, la portée du capteur peut-être améliorée simplement en augmentant le diamètre externe de la structure en pot, de sorte que l'écart entre le pôle central et le pôle externe soit plus important.

On peut également augmenter cette portée en augmentant la section des deux pôles de la structure en pot.

Ce mode de réalisation axisymétrique présente l'avantage d'être insensible à l'orientation des câbles métalliques constituant l'armature adjacente. Le capteur est donc insensible à l'anisotropie de cette couche adjacente.

Avantageusement, la bobine d'excitation et de mesure est alimentée par une source électrique alternative.

En utilisant une fréquence d'alimentation alternative, il est avantageux de limiter celle-ci en dessous de 150 kHz, on limite alors très fortement la génération de courants de Foucault dans l'armature adjacente de la couche. Par ailleurs, en dépassant une fréquence de 10 kHz, on s'affranchit des bruits classiques mesurés par une antenne en champ proche.

D'autre part, plus on augmente la fréquence d'alimentation pour un courant donné, plus on améliore la résolution temporelle de la mesure. Enfin, l'augmentation de la fréquence permet de diminuer le temps de mesure ce qui a un impact favorable sur la consommation électrique de l'ensemble.

On a constaté qu'il est avantageux d'utiliser une fréquence d'alimentation comprise entre 40 et 80 kHz.

Pour évaluer la distance $d$ entre le capteur et l'armature métallique de pneumatique, on peut mesurer l'impédance complexe ou seulement une partie de cette impédance telle que la résistance ou l'inductance.

On peut également mesurer la phase ou le module de l'impédance complexe.

Avantageusement, on mesure l'inductance de la bobine.

Par exemple, on peut mesurer l'inductance de la bobine au moyen de la formule suivante :

$$U=L(di/dt)$$

Pour ce faire on peut alimenter la bobine au moyen d'un courant sinusoïdal stationnaire connu, ce qui permet d'en connaître précisément la dérivée par rapport au temps, et on peut utiliser un dispositif de mesure de l'amplitude de la tension aux bornes de la bobine.

Ce dispositif de mesure d'amplitude de la tension aux bornes de la bobine peut mesurer en continu la tension ou utiliser un système de démodulation d'amplitude.

Le système de mesure est avantageusement disposé dans un boîtier non conducteur électrique et dont les matériaux ont une susceptibilité magnétique nulle ou suffisamment faible pour être assimilable à l'air ou le vide.

De préférence, la bobine ayant un axe de sensibilité et le boitier ayant une face d'application contre la face libre de la couche dont l'épaisseur est à mesurer, la face d'application du boitier est normale à l'axe de sensibilité de la bobine.

Le boitier peut être un boitier portatif.

Dans ce cas, le système de mesure selon un objet de l'invention peut être appliqué à la mesure de l'épaisseur de matériau caoutchouteux d'un flanc ou d'une gomme intérieure d'un pneumatique. Cette mesure peut être réalisée lors de la fabrication du pneumatique ou après la fin de celle-ci.

Le boitier peut aussi être apte à être disposé sur ou encastré dans un sol de roulage.

Dans ce cas, le système de mesure est de préférence appliqué à la mesure de l'épaisseur de matériau caoutchouteux restante d'une bande de roulement d'un pneumatique.

Bien entendu, la bobine d'excitation et de mesure du système de mesure selon un objet de l'invention peut être constituée d'une pluralité de bobines connectées en série ou en parallèle.

L'invention s'applique particulièrement aux pneumatiques comportant des renforts métalliques dans leur sommet et/ou leurs nappes carcasses tels ceux destinés à équiper des véhicules à moteur de type tourisme, SUV ("*Sport Utility Vehicles*"), comme des véhicules industriels choisis parmi camionnettes, « Poids-lourd » - c'est-à-dire métro, bus, engins de transport routier (camions, tracteurs, remorques), véhicules hors-la-route tels qu'engins de génie civil -, autres véhicules de transport ou de manutention.

## Description des Figures

Les figures annexées illustrent plusieurs modes de réalisation d'un système de mesure selon un objet de l'invention en prenant comme exemple principal son application à la mesure de l'épaisseur de bandes de roulement de pneumatiques :

- la figure 1 est une vue en perspective d'un véhicule dont un pneumatique passe au-dessus d'un boitier comportant un système de mesure selon un objet de l'invention ;
- la figure 2 présente un boitier avec un système de mesure ;
- la figure 3 présente une coupe d'un pneumatique en contact avec le boitier du système de mesure ;
- la figure 4 présente le principe de fonctionnement d'un système de mesure dans le cas d'une bobine à air, en l'absence (a) et en présence (b) d'une plaque métallique ;
- la figure 5 présente de façon schématique un exemple de fonctionnement du système de mesure dans le cas d'une bobine avec une ferrite en forme de U ;
- la figure 6 présente un mode de réalisation alternatif du système de la figure 5 ;
- la figure 7 présente un deuxième mode de réalisation avec une ferrite en forme de E ;
- la figure 8 présente un troisième mode de réalisation avec une ferrite en forme de pot ;
- la figure 9 présente schématiquement une structure de l'électronique d'un système de mesure.

## Description détaillée de l'invention

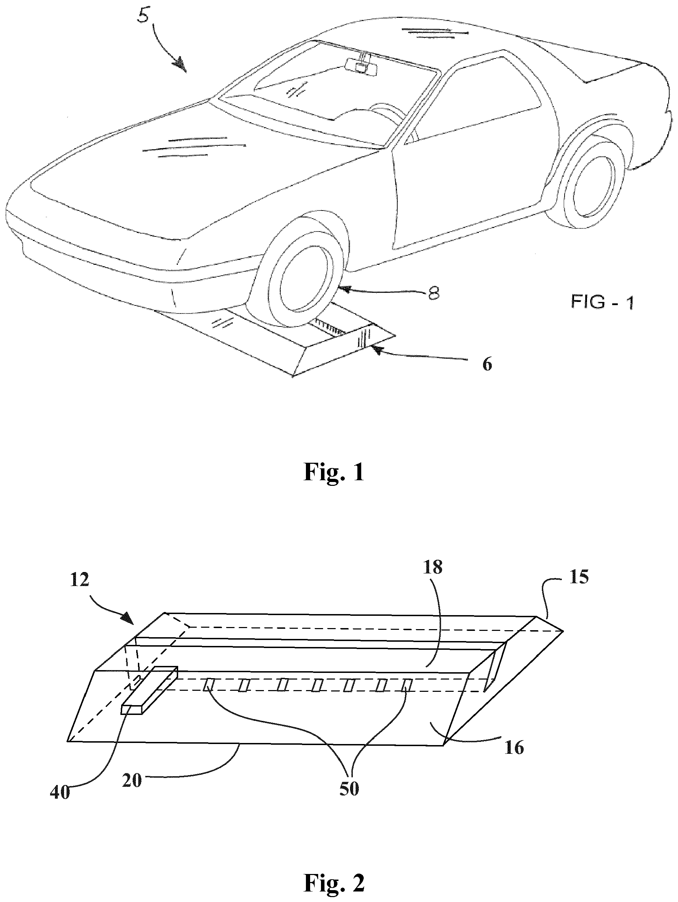

La figure 1 présente un véhicule 5 dont le pneumatique 8 roule sur un boitier 6 comportant un système de mesure de l'usure. La figure montre un véhicule de tourisme mais un tel système de mesure est aussi utilisable pout tout autre véhicule, tel un poids-lourd ou un car. La mesure de l'épaisseur restante de matériau caoutchouteux de la bande de roulement du pneumatique 8 est faite lorsque le pneumatique roule au-dessus du boitier 6 sans qu'il soit nécessaire d'arrêter le véhicule ou de démonter le pneumatique du véhicule.

La figure 2 illustre un boitier 12 selon l'un des objets de l'invention. Celui-ci se présente comme un ensemble portatif qui peut être déposé sur un sol de roulage. Il a une section droite sensiblement trapézoïdale. Le boitier comprend deux portions inclinées, une rampe d'accès 15 et une rampe de sortie 16. Entre les deux se trouve une portion 18 sensiblement horizontale. La portion 18 du boitier 12 protège un ou une rangée de capteurs 50 destinés à réaliser les mesures de distance. La base 20 du boitier est placée contre le sol de roulage et procure à celui-ci la stabilité nécessaire pendant le fonctionnement du système. Le boitier 12 comporte aussi une électronique 40 avec une source d'énergie qui alimente en courant alternatif les capteurs 50. Les mesures sont faites lorsque l'aire de contact du pneumatique repose sur la portion horizontale 18. Cette portion horizontale est la face d'application du boitier contre la surface de la bande de roulement du pneumatique. Le boitier 12 est réalisé en un matériau non conducteur dont les propriétés magnétiques sont assimilables à celles de l'air pour ne pas perturber les mesures.

Selon d'autres modes de réalisation, le boitier peut être encastré dans un sol de roulage ou de dimensions et de poids approprié pour pouvoir être appliqué contre un flanc ou une gomme intérieure d'un pneumatique.

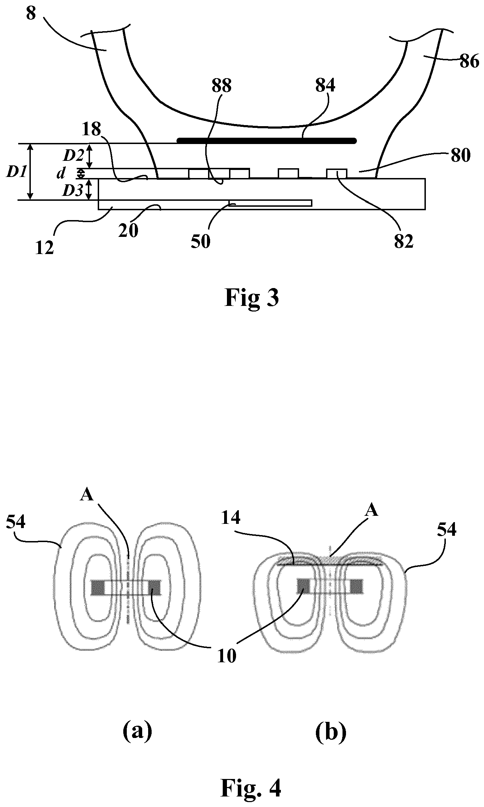

La mesure de l'épaisseur restante de matériau caoutchouteux d'une bande de roulement d'un pneumatique est illustrée à la figure 3. Cette figure présente une coupe partielle d'un pneumatique 8 en appui sur la face d'application 18 d'un boitier 12. Le pneumatique 8 comprend notamment une bande de roulement 80 avec des sculptures 82, une armature de sommet 84 constituée de deux ou plus nappes de renforts métalliques (non représentées), et de flancs 86. Le boitier 12 comprend une face d'application 18, une base 20 et une rangée de capteurs 50. La surface de roulage 88 de la bande de roulement 80 est en appui contre la face d'application 18 du boitier 12.

Les capteurs 50 mesurent, comme il sera expliqué ci-dessous, la distance $D1$ qui les sépare de l'armature métallique 84 du sommet du pneumatique 8. $D1$ a trois composantes. Deux de ces composantes sont fixes, la distance $D2$ qui sépare le fond des sculptures 82 de l'armature 84, et la distance $D3$ qui sépare les capteurs 50 de la face d'application 18 du boitier 12. Une composante est variable avec le degré d'usure de la bande de roulement, c'est $d$ qui correspond à l'épaisseur restante de la bande de roulement. On a :

$$d = D1 - D2 - D3$$

La distance $D2$ peut être connue à partir de l'identification du type de pneumatique mesuré. Cette identification peut être manuelle ou automatique, par exemple en récupérant des données d'identification inscrites dans un transpondeur tel un RFID incorporé dans la structure du pneumatique.

La figure 4 illustre le principe de fonctionnement du capteur d'un système de mesure selon un objet de l'invention.

A la figure 4(a) est représenté une bobine à air 10 avec un axe de symétrie et de sensibilité A. Lorsque les bornes de la bobine sont alimentées par un courant alternatif, les lignes de champ magnétique 54 émises par ce dispositif s'étendent dans l'air tout autour de la bobine tel que schématisé à la fig. 4 (a).

Si on approche de ce dispositif une armature métallique 14, bonne conductrice de champ magnétique et mauvaise conductrice électrique, telle une nappe sommet d'un pneumatique constituée de renforts métalliques parallèles noyés dans deux couches de matériau caoutchouteux peu conducteur, les lignes de champ vont naturellement chercher à passer par cette armature métallique plutôt que dans l'air, car l'air a une reluctance supérieure à celle de l'armature métallique. On observe une localisation des lignes de champ magnétique 54 à travers l'armature métallique 14.

Il en résulte que dans la zone située entre la bobine 10 et l'armature métallique, la densité de flux magnétique va augmenter.

On peut ainsi obtenir une mesure de la variation de position de l'armature métallique 14 relativement à la bobine 10 par une mesure de la variation de l'inductance de la bobine 10.

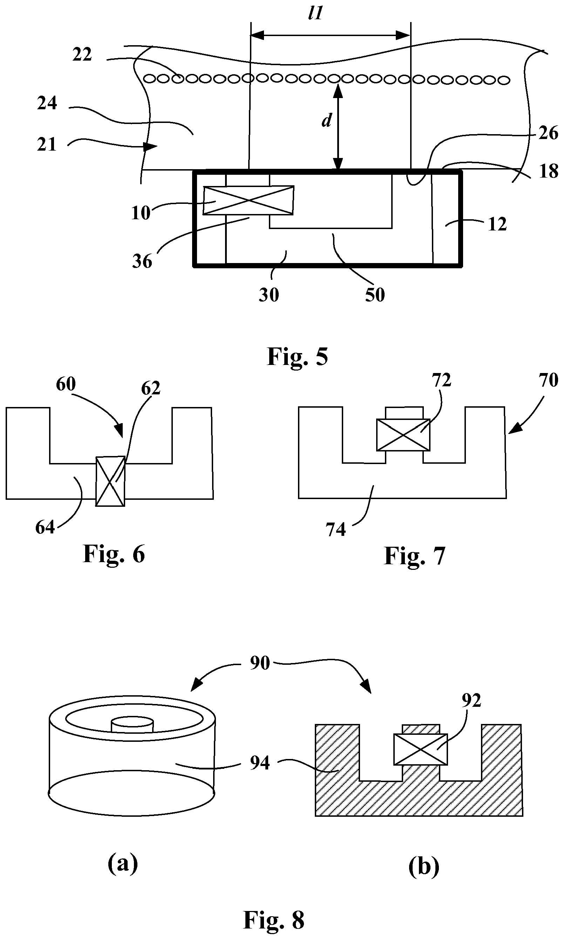

La figure 5 présente un exemple schématique de fonctionnement d'un mode de réalisation d'un système de mesure dans le cas d'une bobine et d'une ferrite en forme de U.

La couche 21 dont on veut mesurer l'épaisseur $d$ comporte une couche de matériau caoutchouteux 24 adjacente à une armature 22 constituée de renforts dont la perméabilité magnétique est supérieure à la perméabilité magnétique de l'air tels que ceux usuellement utilisés pour des nappes carcasses ou des nappes sommet de pneumatiques, notamment poids-lourd.

Le boitier 12 du système de mesure comporte un capteur 50 qui comporte une bobine 10 disposée autour de l'une des branches latérales 36 d'une ferrite 30 en forme de U. La présence de la ferrite 30 permet de localiser la circulation des lignes de champ magnétique à travers elle et ainsi de localiser la zone de mesure. Les deux barres du U sont éloignées d'une distance $l1$.

Le boitier 12 a sa face d'application 18 en appui contre la face libre 26 de la couche 21.

Selon une caractéristique essentielle du système de mesure, la fréquence et la puissance d'excitation de la bobine 10 sont telles que l'inductance aux bornes de la bobine augmente lorsque la distance $d$ diminue.

Le mode de fonctionnement du capteur est ainsi un mode reluctant donc lié à la perméabilité magnétique des différentes parties du circuit magnétique.

La perméabilité magnétique du matériau caoutchouteux est très inférieure à celle de l'armature adjacente qui est elle-même inférieure à celle de la ferrite.

En conséquence, la reluctance de la couche 24 de matériau caoutchouteux est très supérieure à celle de l'armature adjacente 22 qui est elle-même supérieure à celle de la ferrite 30. Cela implique que la variation d'inductance mesurée aux bornes de la bobine 10 est principalement liée à la variation de la distance $d$, épaisseur de la couche de matériau caoutchouteux parce que toute variation de la reluctance de l'armature adjacente liée par exemple au nombre de renforts ou à leur construction n'a qu'une influence mineure sur la précision de la mesure. La précision et la sensibilité d'un tel capteur en mode reluctant sont donc bonnes. La portée du capteur est liée à la distance $l1$, distance entre les deux barres du U, et à la section des pôles constitués par ces deux barres parallèles.

Les figures 6 à 8 présentent des modes de réalisation alternatifs de capteurs.

A la figure 6, le capteur 60 comprend une ferrite 64 en forme de U et une bobine 62 disposée autour de la barre centrale du U.

A la figure 7, le capteur 70 comprend une ferrite 74 en forme de E et une bobine 72 disposée autour de la barre centrale du E.

A la figure 8, le capteur 90 comporte une ferrite 94 en forme de pot avec un axe de symétrie et une barre centrale disposée sensiblement selon cet axe de symétrie et une bobine 92 disposée autour de la barre centrale du pot. La figure 8(a) présente une vue en perspective du capteur et la figure 8(b) une coupe selon l'axe de symétrie.

Cette structure en pot présente l'avantage d'être insensible à l'anisotropie de l'architecture métallique interne au pneumatique.

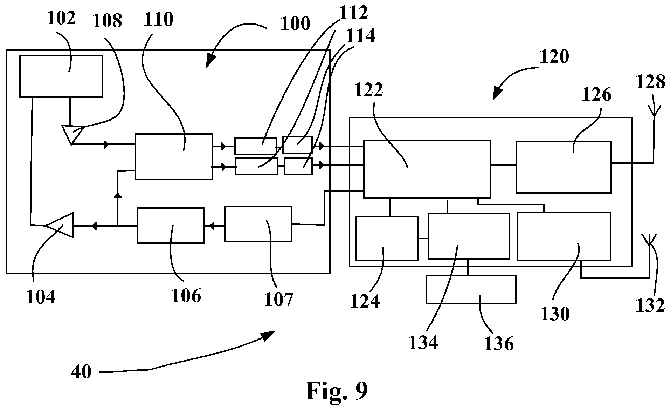

La figure 9 montre un exemple de la structure de l'électronique 40 permettant la mesure d'épaisseur d'une couche de gomme de pneumatique.

Cette électronique est constituée d'un «module capteur» 100 et d'une «carte mère » 120. Elle permet donc de réaliser une mesure d'épaisseur de couche en un unique point.

Pour étendre le principe de ce schéma à un système constitué d'une multiplicité de capteurs, il suffit d'utiliser plusieurs « modules capteurs » tous reliés à la même « carte mère ».

En mode reluctant, l'inductance $L$ du capteur augmente lorsque la distance $d$ entre le capteur et une couche adjacente, constituée de câbles métalliques de pneumatique, diminue. Cette électronique a donc pour but de mesurer l'inductance L de la bobine du capteur, afin de pouvoir déduire cette distance entre le capteur et la couche adjacente.

Le «module capteur» 100 est constitué, entre autre, d'un capteur 102 comme précédemment décrit, alimenté par un courant I qui est pris comme référence de phase (φ=0). Ce courant I est généré par un amplificateur en courant 104, lui-même piloté par un oscillateur 106, dont la fréquence est imposée par une base de temps 107. Les amplificateur, oscillateur et base de temps font partie du « module capteur ».

La tension U, de phase φ non nulle par rapport au courant I, prélevée aux bornes du capteur, est d'abord amplifiée par l'amplificateur 108 puis injectée dans un double démodulateur 110, de même que le signal de sortie de l'oscillateur 106.

En sortie du démodulateur 110, on trouve les signaux X et Y qui représentent les deux composantes complexes décrivant la tension aux bornes du capteur, telles que :

$$U = K\sqrt{X^2 + Y^2}$$

dans laquelle K est un facteur lié à l'amplification présente le long de la chaine électronique.

Les deux signaux X et Y sont ensuite filtrés par les filtres 112 et numérisés au moyen de convertisseurs analogique/numérique (ADC) 114, puis injectés dans le microcontrôleur 122 de la « carte mère » 120.

Le microcontrôleur 122 déduit de X et Y la valeur de l'inductance L du capteur 102. Il calcule d'abord la valeur de l'amplitude de la tension U aux bornes du capteur en utilisant la formule ci-dessus.

Dans un second temps, il déduit de cette valeur l'inductance L de la bobine du capteur, la valeur du courant I injecté dans le capteur étant connue, au moyen de la formule suivante :

$$L = \frac{U}{di/dt}$$

La carte mère est également munie de plusieurs blocs fonctionnels additionnels :

- une mémoire 124 afin de permettre l'enregistrement des mesures réalisées par le capteur 102 ;
- un décodeur RFID 126 qui permet l'identification du pneumatique, au moyen d'une antenne 128, lorsque cela peut se faire en mettant à profit la présence de RFID incorporé dans la structure du pneumatique ;
- un module de communication sans fil 130 qui permet l'envoi des informations à distance, via une antenne supplémentaire 132 ; et
- une alimentation 134 distribuant le courant nécessaire à l'ensemble du système, à partir d'une batterie 136.

L'ensemble a la capacité à réaliser des mesures nombreuses sur des pneumatiques, sans changement de batteries, ce qui confère au système une autonomie de plusieurs années sans intervention humaine.

## Revendications

1. Système de mesure de l'épaisseur d'une couche de matériau caoutchouteux d'un pneumatique, ladite couche comportant une face liée à une armature adjacente réalisée avec au moins un matériau de perméabilité magnétique supérieure à la perméabilité magnétique de l'air et une face libre en contact avec l'air, ledit système comprenant un capteur capable de mesurer la distance *d* entre la face liée et la face libre de ladite couche de matériau caoutchouteux, le capteur comportant une unique bobine d'excitation et de mesure, et la fréquence et la puissance d'excitation de ladite bobine étant telles que l'inductance aux bornes de ladite bobine augmente lorsque la distance *d* diminue, et la bobine étant disposée autour, ou étant entourée par, un matériau à haute résistivité électrique et haute perméabilité magnétique, ledit système comprenant de plus un boîtier portatif en matériau non conducteur protégeant le capteur et comprenant deux portions inclinées formant une rampe d'accès et une rampe de sortie entre lesquelles se trouve une portion horizontale formant la face d'application du boîtier contre la surface de la bande de roulement du pneumatique.

2. Système de mesure selon la revendication 1, dans lequel ledit matériau à haute résistivité électrique et haute perméabilité magnétique a une forme de U.

3. Système de mesure selon la revendication 2, dans lequel ladite bobine est disposée autour de l'une des branches latérales du U.

4. Système de mesure selon la revendication 2, dans lequel ladite bobine est disposée autour du fond du U.

5. Système de mesure selon la revendication 1, dans lequel ledit matériau à haute résistivité électrique et haute perméabilité magnétique a une forme de E.

6. Système de mesure selon la revendication 1, dans lequel ledit matériau à haute résistivité électrique et haute perméabilité magnétique a un axe de symétrie et présente selon toute coupe axiale une forme de E.

7. Système de mesure selon l'une des revendications 5 et 6, dans lequel ladite bobine est disposée autour de la barre centrale du E.

8. Système de mesure selon l'une quelconque des revendications 1 à 7, dans lequel le matériau à haute résistivité électrique et haute perméabilité magnétique est une ferrite.

9. Système de mesure selon l'une quelconque des revendications précédentes, dans lequel ladite bobine d'excitation et de mesure est alimentée par une source électrique alternative.

10. Système de mesure selon la revendication 9, dans lequel ladite bobine d'excitation et de mesure est alimentée par une source électrique alternative de fréquence supérieure à 10 kHz et inférieure à 150 kHz.

11. Système de mesure selon la revendication 10, dans lequel ladite bobine d'excitation et de mesure est alimentée par une source électrique alternative de fréquence comprise entre 40 et 80 kHz.

12. Système de mesure selon l'une quelconque des revendications précédentes, dans lequel on mesure l'impédance complexe ou une partie de cette impédance telle que la résistance, l'inductance, la phase ou le module de l'impédance complexe.

13. Système de mesure selon la revendication 12, dans lequel on mesure l'inductance de la bobine.

14. Système de mesure selon l'une quelconque des revendications précédentes, tel qu'il est disposé à l'intérieur d'un boîtier non conducteur électrique et dont les matériaux ont une susceptibilité magnétique nulle ou suffisamment faible pour être assimilable à celle de l'air ou du vide.

15. Système de mesure selon la revendication 14, dans lequel, la bobine ayant un axe de sensibilité et ledit boîtier ayant une face d'application contre la face libre de ladite couche, ladite face d'application est normale à l'axe de sensibilité de la bobine.

16. Système de mesure selon l'une des revendications 14 et 15, tel que ledit boîtier est un boîtier portatif.

17. Système de mesure selon l'une des revendications 14 et 15, tel que ledit boîtier est apte à être disposé sur ou encastré dans un sol de roulage.

18. Système de mesure selon l'une quelconque des revendications précédentes, dans lequel la bobine d'excitation et de mesure est constituée d'une pluralité de bobines connectées en série ou en parallèle.

19. Application du système de mesure selon l'une quelconque des revendications précédentes à la mesure de l'épaisseur de matériau caoutchouteux restante d'une bande de roulement d'un pneumatique.

20. Application du système de mesure selon l'une quelconque des revendications 1 à 16 à la mesure de l'épaisseur de matériau caoutchouteux d'un flanc ou d'une gomme intérieure d'un pneumatique.

**Patentansprüche**

1. System zur Messung der Dicke einer Kautschukmaterialschicht eines Reifens, wobei die Schicht eine Fläche, die mit einer benachbarten Bewehrung verbunden ist, welche aus mindestens einem Material ausgeführt ist, dessen magnetische Permeabilität größer als die magnetische Permeabilität der Luft ist, und eine freie Fläche in Kontakt mit der Luft umfasst, wobei das System einen Sensor umfasst, der in der Lage ist, den Abstand d zwischen der verbundenen Fläche und der freien Fläche der Kautschukmaterialschicht zu messen, wobei der Sensor eine einzige Erreger- und Messspule umfasst **und** die Erregungsfrequenz und -leistung der Spule derart sind, dass die Induktivität an den Klemmen der Spule steigt, wenn der Abstand d abnimmt, und die Spule um ein Material mit hohem spezifischen Widerstand und hoher magnetischer Permeabilität angeordnet ist oder davon umgeben ist, wobei das System ferner ein tragbares Gehäuse aus nicht leitendem Material umfasst, das den Sensor schützt und zwei geneigte Abschnitte umfasst, die eine Zufahrtsrampe und eine Ausfahrrampe bilden, zwischen denen sich ein waagerechter Abschnitt befindet, der die Anlagefläche des Gehäuses an der Oberfläche des Laufstreifens des Reifens bildet.

2. Messsystem nach Anspruch 1, wobei das Material mit hohem spezifischen Widerstand und hoher magnetischer Permeabilität die Form eines U hat.

3. Messsystem nach Anspruch 2, wobei die Spule um einen der seitlichen Zweige des U angeordnet ist.

4. Messsystem nach Anspruch 2, wobei die Spule um den Boden des U angeordnet ist.

5. Messsystem nach Anspruch 1, wobei das Material mit hohem spezifischen Widerstand und hoher magnetischer Permeabilität die Form eines E hat.

6. Messsystem nach Anspruch 1, wobei das Material mit hohem spezifischen Widerstand und hoher magnetischer Permeabilität eine Symmetrieachse hat und entlang jedes Axialschnitts die Form eines E aufweist.

7. Messsystem nach einem der Ansprüche 5 und 6, wobei die Spule um den mittleren Schenkel des E angeordnet ist.

8. Messsystem nach einem der Ansprüche 1 bis 7, wobei das Material mit hohem spezifischen Widerstand und hoher magnetischer Permeabilität ein Ferrit ist.

9. Messsystem nach einem der vorhergehenden Ansprüche, wobei die Erreger- und Messspule von einer Wechselspannungsquelle versorgt wird.

10. Messsystem nach Anspruch 9, wobei die Erreger- und Messspule von einer Wechselspannungsquelle mit einer Frequenz von mehr als 10 kHz und weniger als 150 kHz versorgt wird.

11. Messsystem nach Anspruch 10, wobei die Erreger- und Messspule von einer Wechselspannungsquelle mit einer Frequenz zwischen 40 und 80 kHz versorgt wird.

12. Messsystem nach einem der vorhergehenden Ansprüche, wobei man die komplexe Impedanz oder einen Teil dieser Impedanz wie den Widerstand, die Induktivität, die Phase oder das Modul der komplexen Impedanz misst.

13. Messsystem nach Anspruch 12, wobei man die Induktivität der Spule misst.

14. Messsystem nach einem der vorhergehenden Ansprüche, wobei es im Innern eines Gehäuses angeordnet ist, das elektrisch nicht leitend ist und dessen Materialien eine magnetische Suszeptibilität haben, die gleich null ist oder ausreichend gering ist, um der von Luft oder Vakuum gleichgesetzt zu werden.

15. Messsystem nach Anspruch 14, wobei die Spule eine Empfindlichkeitsachse hat und das Gehäuse eine Anlagefläche an die freie Fläche der Schicht hat, wobei die Anlagefläche senkrecht zur Empfindlichkeitsachse der Spule verläuft.

16. Messsystem nach einem der Ansprüche 14 und 15, wobei das Gehäuse ein tragbares Gehäuse ist.

17. Messsystem nach einem der Ansprüche 14 und 15, wobei das Gehäuse geeignet ist, auf einem Fahrboden angeordnet oder in einen Fahrboden versenkt zu werden.

18. Messsystem nach einem der vorhergehenden Ansprüche, wobei die Erreger- und Messspule aus einer Vielzahl von Spulen besteht, die in Reihe oder parallel angeschlossen sind.

19. Anwendung des Messsystems nach einem der vorhergehenden Ansprüche zum Messen der Kautschukmaterialrestdicke eines Laufstreifens eines Reifens.

20. Anwendung des Messsystems nach einem der Ansprüche 1 bis 16 zum Messen der Kautschukmaterialdicke einer Flanke oder eines Innengummis eines Reifens.

**Claims**

1. System for measuring the thickness of a layer of rubber material of a tyre, said layer comprising a face joined to an adjacent reinforcement made with at least one material having a magnetic permeability greater than the magnetic permeability of air, and a free face in contact with the air, said system comprising a sensor capable of measuring the distance $d$ between the joined face and the free face of said layer of rubber material, the sensor comprising a single excitation and measurement coil, **and** the excitation frequency and power of said coil are such that the inductance at the terminals of said coil increases when the distance $d$ decreases, and the coil of the sensor is positioned around, or is surrounded by, a material having high electrical resistivity and high magnetic permeability said system also comprising a portable casing made of a non-conductive material, for protecting the sensor, and comprising two inclined portions, forming an access ramp and an exit ramp between which these two portions there is a substantially horizontal portion forming the application face of the casing against the tyre tread.

2. Measurement system according to Claim 2, wherein said material having high electrical resistivity and high magnetic permeability is U-shaped.

3. Measurement system according to Claim 3, wherein said coil is positioned around one of the lateral branches of the U.

4. Measurement system according to Claim 3, wherein said coil is positioned around the bottom of the U.

5. Measurement system according to Claim 2, wherein said material having high electrical resistivity and high magnetic permeability is E-shaped.

6. Measurement system according to Claim 1, wherein said material having high electrical resistivity and high magnetic permeability has an axis of symmetry and is E-shaped in any axial cross section.

7. Measurement system according to one of Claims 5 and 6, wherein said coil is positioned around the central bar of the E.

8. Measurement system according to any of Claims 1 to 7, wherein the material having high electrical resistivity and high magnetic permeability is a ferrite.

9. Measurement system according to any of the preceding claims, wherein said excitation and measurement coil is supplied by an alternating power source.

10. Measurement system according to Claim 9, wherein said excitation and measurement coil is supplied by an alternating power source having a frequency of more than 10 kHz and less than 150 kHz.

11. Measurement system according to Claim 10, wherein said excitation and measurement coil is supplied by an alternating power source having a frequency in the range from 40 kHz to 80 kHz.

12. Measurement system as claimed in any of the preceding claims, wherein the complex impedance, or a part of this impedance such as the resistance, the inductance, the phase or the modulus of the complex impedance, is measured.

13. Measurement system according to Claim 12, wherein the inductance of the coil is measured.

14. Measurement system according to any of the preceding claims, such that it is positioned inside an electrically non-conductive casing and is made of materials with a magnetic susceptibility equal to zero or sufficiently low to be similar to that of air or a vacuum.

15. Measurement system according to Claim 14, wherein the coil has an axis of sensitivity and said casing has a face for application against the free face of said layer, and said application face is perpendicular to the axis of sensitivity of the coil.

16. Measurement system according to one of Claims 14 and 15, such that said casing is a portable casing.

17. Measurement system according to one of Claims 14 and 15, such that said casing can be positioned on, or embedded in, a roadway.

18. Measurement system according to any of the preceding claims, wherein the excitation and measurement coil is formed by a plurality of coils connected in series or in parallel.

19. Use of the measurement system according to any of the preceding claims for measuring the thickness of remaining rubber material on a tread of said tyre.

20. Use of the measurement system according to any of Claims 1 to 16 for measuring the thickness of rubber material of a sidewall or internal rubber element of said tyre.

FIG - 1

**Fig. 1**

**Fig. 2**

**Fig 3**

**(a)**　　　　　　　　　**(b)**

**Fig. 4**

**Fig. 5**

**Fig. 6**

**Fig. 7**

**(a)**

**(b)**

**Fig. 8**

102 108 110 100 112
114

120

122 126 128

104 106 107 124 134 136 130 132

40

**Fig. 9**

**EP 3 011 264 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7578180 B2
- WO 2008059283 A
- US 20020088527 A1